# EUROPEAN PATENT APPLICATION

(11) **EP 4 831 838 A1**
(43) Date of publication of application: **28.10.2026**
(21) Application number: 24905822.3
(22) Date of filing: 25.10.2024
(51) Int. Cl.: G06F 16/9535

(54) **MEDIA CONTENT COMMENT RECOMMENDATION METHOD AND APPARATUS, AND COMMENT CONTENT DISPLAY METHOD AND APPARATUS**

(30) Priority: 18.12.2023 CN 202311740617
(71) Applicant: Beijing Zitiao Network Technology Co., Ltd., Beijing 100190 (CN)
(72) Inventor: LIU, Fujia, Beijing 100028 (CN); WANG, Xin, Beijing 100028 (CN)
(74) Representative: Isarpatent
(86) International application number: PCT/CN2024/127263
(87) International publication number: WO 2025/130334

(57) **Abstract**

The present disclosure relates to the field of computer technologies, and discloses a method for recommending a comment on media content, a method for displaying comment content, and an apparatus. The method for recommending a comment on media content includes: obtaining and displaying target comment content for target media content; and displaying, in response to a recommendation operation on the target comment content, a recommendation icon corresponding to the target comment content, and simultaneously displaying, in a media content playback interface, recommendation information corresponding to the recommendation operation, associated information of the target comment content, and the target media content.

## Description

### CROSS-REFERENCE TO RELATED APPLICATION(S)

The present application claims a priority to Chinese Patent Application No. 202311740617.2, filed on December 18, 2023 and entitled "MEDIA CONTENT COMMENT RECOMMENDATION METHOD AND APPARATUS, AND COMMENT CONTENT DISPLAY METHOD AND APPARATUS", which is incorporated herein by reference in its entirety.

### FIELD

The present disclosure relates to the field of computer technologies, and specifically, to a method and apparatus for recommending a comment on media content, and a method and apparatus for displaying comment content.

### BACKGROUND

With the development of Internet technologies, an increasing number of people share multimedia resources such as some interesting anecdotes from daily life, social news, and fresh news through applications. After viewing content of interest in an application, people may comment on the content, and may view other comments related to the content of interest during commenting, to discover comments that are interesting or of interest to them.

### SUMMARY

In view of this, embodiments of the present disclosure provide a method and apparatus for recommending a comment on media content, and a method and apparatus for displaying comment content.

According to a first aspect, an embodiment of the present disclosure provides a method for recommending a comment on media content. The method includes: obtaining and displaying target comment content for target media content; and displaying, in response to a recommendation operation on the target comment content, a recommendation icon corresponding to the target comment content, where the recommendation icon indicates that the target comment content is recommended based on a trigger operation, and simultaneously displaying, in a media content playback interface, recommendation information corresponding to the recommendation operation, associated information of the target comment content, and the target media content.

According to a second aspect, an embodiment of the present disclosure provides a method for displaying comment content. The method includes: displaying a media content playback interface, where the media content playback interface includes a media resource playback area and an information display area, and the information display area includes a recommended comment display area and a media content information description area; obtaining target media content; and displaying the target media content in the media resource playback area, and displaying, in the recommended comment display area, target comment content and recommendation information corresponding to a recommendation operation performed on the target comment content, where the target comment content is comment content for the target media content.

According to a third aspect, an embodiment of the present disclosure provides an apparatus for recommending a comment on media content. The apparatus includes: a comment content obtaining module configured to obtain and display target comment content for target media content; and a recommendation module configured to display, in response to a recommendation operation on the target comment content, a recommendation icon corresponding to the target comment content, where the recommendation icon indicates that the target comment content is recommended based on a trigger operation, and simultaneously display, in a media content playback interface, recommendation information corresponding to the recommendation operation, associated information of the target comment content, and the target media content.

According to a fourth aspect, an embodiment of the present disclosure provides an apparatus for displaying comment content. The apparatus includes: a playback display module configured to display a media content playback interface, where the media content playback interface includes a media resource playback area and an information display area, and the information display area includes a recommended comment display area and a media content information description area; a media content obtaining module configured to obtain target media content; and a comment display module configured to display the target media content in the media resource playback area, and display, in the recommended comment display area, target comment content and recommendation information corresponding to a recommendation operation performed on the target comment content, where the target comment content is comment content for the target media content.

According to a fifth aspect, an embodiment of the present disclosure provides an electronic device. The electronic device includes: a memory and a processor communicatively connected to each other. The memory stores computer instructions, and the processor executes the computer instructions to perform the method for recommending a comment on media content according to the first aspect or any implementation corresponding to the first aspect or the method for displaying comment content according to the second aspect or any implementation corresponding to the second aspect.

According to a sixth aspect, an embodiment of the present disclosure provides a computer-readable storage medium. The computer-readable storage medium has computer instructions stored therein that are used to cause a computer to perform the method for recommending a comment on media content according to the first aspect or any implementation corresponding to the first aspect or the method for displaying comment content according to the second aspect or any implementation corresponding to the second aspect.

### BRIEF DESCRIPTION OF THE DRAWINGS

To more clearly describe the technical solutions in specific implementations of the present disclosure or in the prior art, the accompanying drawings for describing the specific implementations or the prior art will be briefly described below. Apparently, the accompanying drawings in the description below show some implementations of the present disclosure, and those of ordinary skill in the art may still derive other accompanying drawings from these accompanying drawings without creative efforts.
FIG. 1 is a schematic flowchart of a method for recommending a comment on media content according to an embodiment of the present disclosure;
FIG. 2 is a schematic diagram of displaying a recommendation icon on a comment display interface according to an embodiment of the present disclosure;
FIG. 3 is a schematic flowchart of another method for recommending a comment on media content according to an embodiment of the present disclosure;
FIG. 4 is a schematic diagram of displaying comment content according to an embodiment of the present disclosure;
FIG. 5 is a schematic diagram of displaying a piece of recommendation prompt information according to an embodiment of the present disclosure;
FIG. 6 is a schematic diagram of displaying another piece of recommendation prompt information according to an embodiment of the present disclosure;
FIG. 7 is a schematic diagram of obtaining description information according to an embodiment of the present disclosure;
FIG. 8 is a schematic diagram of displaying recommendation information and associated information according to an embodiment of the present disclosure;
FIG. 9 is a schematic flowchart of a method for displaying comment content according to an embodiment of the present disclosure;
FIG. 10 is a schematic diagram of a media content playback interface according to an embodiment of the present disclosure;
FIG. 11 is a schematic diagram of displaying user information in a recommended comment display area according to an embodiment of the present disclosure;
FIG. 12 is a schematic flowchart of another method for displaying comment content according to an embodiment of the present disclosure;
FIG. 13 is a schematic diagram of an associated interface of a second user according to an embodiment of the present disclosure;
FIG. 14 is a block diagram of a structure of an apparatus for recommending a comment on media content according to an embodiment of the present disclosure;
FIG. 15 is a block diagram of a structure of an apparatus for displaying comment content according to an embodiment of the present disclosure; and
FIG. 16 is a schematic diagram of a hardware structure of a computer device according to an embodiment of the present disclosure.

### DETAILED DESCRIPTION OF EMBODIMENTS

To make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative efforts shall fall within the scope of protection of the present disclosure.

For comments that are interesting or of interest, if a user wants to share them with friends, the user can only privately message them to specific friends or mention (@) friends in a comment area. Sharing outside a platform is limited to recommending in the form of screenshots.

Based on this, according to the technical solution of the present disclosure, target comment content of interest can be recommended, so that a user viewing media content can view comment content recommended by a friend.

According to an embodiment of the present disclosure, an embodiment of a method for recommending a comment on media content is provided. It should be noted that steps shown in a flowchart of the accompanying drawings may be performed, for example, in a computer system including a group of computer-executable instructions. Although a logical order is shown in the flowchart, the steps shown or described may be performed in an order different from that shown herein in some cases.

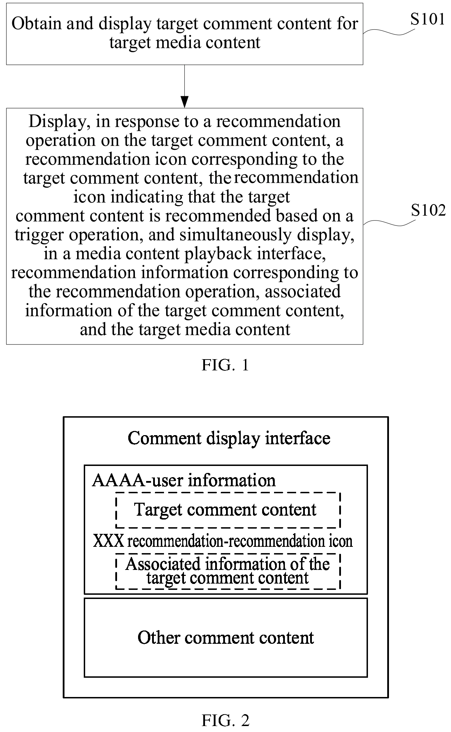

In this embodiment, a method for recommending a comment on media content is provided, which may be applied to an electronic device, such as a mobile phone, a tablet computer, or a computer. FIG. 1 is a schematic flowchart of a method for recommending a comment on media content according to an embodiment of the present disclosure. As shown in FIG. 1, the process includes the following steps.

Step S101: Target comment content is obtained and displayed for target media content.

The target media content is video content, audio content, etc. published in a social application. The target media content is displayed through a media content playback interface. Other users can view the target media content, and can perform operations such as commenting, liking, and adding to favorites on the target media content.

The target comment content is one or more pieces of comment content of interest of a user that are determined by the user from a plurality of pieces of comment content corresponding to the target media content. Specifically, after viewing target media content of interest, the user may trigger a comment display operation on the target media content to determine whether there is comment content of interest to the user. Correspondingly, an application may display, in response to the comment display operation of the user, comment content associated with the target media content in a target media content playback interface, so that the user can determine the target comment content from a plurality of comments.

Step S102: In response to a recommendation operation on the target comment content, a recommendation icon corresponding to the target comment content is displayed, where the recommendation icon indicates that the target comment content is recommended based on a trigger operation, and simultaneously display, in a media content playback interface, recommendation information corresponding to the recommendation operation, associated information of the target comment content, and the target media content.

The recommendation operation is an operation that the user triggers on the target comment content. Specifically, the recommendation operation may include long pressing the target comment content, replying to the target comment content, liking the target comment content, etc.

The recommendation icon is an identifier displayed after the recommendation operation is triggered. The recommendation icon is used to indicate that the target comment content is recommended based on the triggered recommendation operation. The recommendation information is used to indicate information about a user recommending the target comment content. The associated information is other comment content associated with the target comment content, for example, reply content for the target comment content.

As shown in FIG. 2, after finding target comment content of interest from a plurality of pieces of comment content, the user may trigger a recommendation operation on the target comment content. Correspondingly, the application may respond to the recommendation operation performed on the target comment content, and display a recommendation icon below the target comment content. When the recommendation icon is displayed, the recommendation information corresponding to the recommendation operation, the associated information of the target comment content, and the target media content are simultaneously displayed in the media content playback interface.

According to the method for recommending a comment on media content provided in this embodiment, when the target comment content is viewed for recommendation, the recommendation icon for the target comment content can be displayed, so that the user can recommend the target comment content viewed by the user by triggering the recommendation icon, and the recommendation information corresponding to the triggered recommendation operation, the associated information of the target comment content, and the target media content can be displayed in the media content playback interface. In this way, flexible recommendation for the target comment content is implemented, and other users viewing the target media content can view the target comment content recommended by friends.

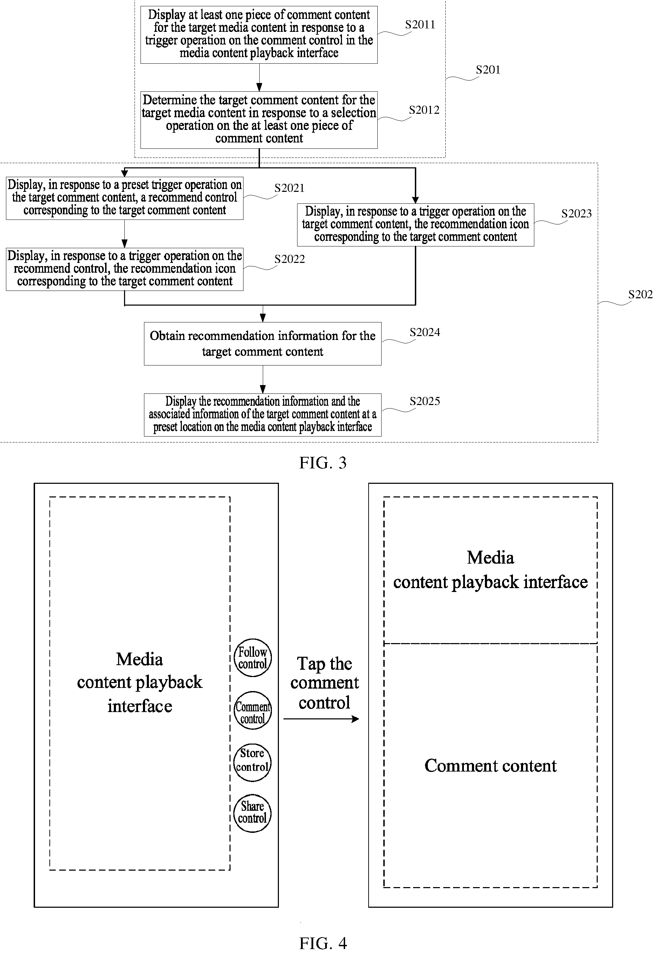

In this embodiment, a method for recommending a comment on media content is provided, which may be applied to an electronic device, such as a mobile phone, a tablet computer, or a computer. FIG. 3 is a schematic flowchart of a method for recommending a comment on media content according to an embodiment of the present disclosure. As shown in FIG. 3, the process includes the following steps.

Step S201: Target comment content for target media content is obtained and displayed.

Specifically, a media content playback interface includes a comment control. The comment control is used to indicate to comment on the target media content and display comment content generated for the target media content. Correspondingly, step S201 may include the following steps.

Step S2011: At least one piece of comment content for the target media content is displayed in response to a trigger operation on the comment control in the media content playback interface.

The trigger operation is an operation that a user performs on the comment control, such as a tap operation and a touch operation. The tap operation is used as an example. As shown in FIG. 4, when the user taps a comment control in a multimedia playback interface, an application may trigger display of comment content in the multimedia playback interface in response to the tap operation of the user, to display one or more pieces of corresponding comment content while playing the target media content.

Step S2012: The target comment content for the target media content is determined in response to a selection operation on the at least one piece of comment content.

The selection operation is an operation of the user to determine target comment content of interest from the comment content. Specifically, the selection operation may include a tap operation, a like operation, an add-to-favorites operation, a reply operation, etc., which is not specifically limited herein.

In a specific implementation, when it is detected that the user taps a piece of comment content, the application may determine the comment content tapped by the user as the target comment content in response to the tap operation of the user.

In a specific implementation, when it is detected that the user likes a piece of comment content, the application may determine the comment content liked by the user as the target comment content in response to the like operation of the user.

In a specific implementation, when it is detected that the user adds a piece of comment content to favorites, the application may determine the comment content that is added to favorites by the user as the target comment content in response to the add-to-favorites operation of the user.

In a specific implementation, when it is detected that the user replies to a piece of comment content, the application may determine the comment content replied to by the user as the target comment content in response to the reply operation of the user.

Certainly, the target comment content may alternatively be determined in another manner, which is not specifically limited herein.

According to the method for recommending a comment on media content provided in this embodiment, all comment content for the target media content is displayed by triggering the comment control, so that the user can browse the comment content to select the target comment content of interest therefrom for recommendation, thereby achieving flexible selection of the target comment content.

Step S202: In response to a recommendation operation on the target comment content, a recommendation icon corresponding to the target comment content is displayed, where the recommendation icon indicates that the target comment content is recommended based on a trigger operation, and simultaneously display, in a media content playback interface, recommendation information corresponding to the recommendation operation, associated information of the target comment content, and the target media content.

Specifically, step S202 may include the following steps.

Step S2021: In response to a preset trigger operation on the target comment content, a recommend control corresponding to the target comment content is displayed.

The preset trigger operation is a preset operation for triggering recommendation of the target comment content, such as a long press operation, a comment operation, a like operation, and a reply operation. The recommend control is a control for triggering a comment recommendation. When the preset trigger operation is performed on the target comment content, the application may display, in response to the preset trigger operation, the recommend control at a preset location relative to the target comment content (for example, below or above the target comment content).

In some optional implementations, step S2021 may include the following steps.

Step a1: A recommendation interface is displayed in response to the preset trigger operation on the target comment content.

Step a2: The recommend control is displayed in the recommendation interface.

When it is detected that the user performs the preset trigger operation on the target comment content, the application switches a display interface of the target comment content to the recommendation interface in response to the preset trigger operation, and displays the recommend control in the recommendation interface, so that the user can recommend the target comment content to other users browsing the target media content by triggering the recommend control.

After the recommendation of the target comment content is completed, the application displays the target comment content recommended by the user and the corresponding target media content in the media content playback interface, so that other users can discover, after viewing the target media content, comment content recommended by friends or discover interesting comment content through the media content playback interface.

In the above-mentioned implementation, when the target comment content is triggered, display of the recommend control for the target comment content is supported. Therefore, when the target comment content is recommended, the target comment content can be simultaneously shared with all friends by directly triggering the recommend control, without the need for a cumbersome screenshot or notification operation. This simplifies a comment recommendation operation, and improves comment content recommendation experience of the user.

In a specific implementation, the preset trigger operation includes a long press operation on the target comment content. Specifically, when the target comment content is determined, the user may long press a location of the target comment content. Correspondingly, the application may switch a comment display interface to the recommendation interface in response to the long press operation of the user on the target comment content, and display the recommend control for the target comment content in the recommendation interface.

In a specific implementation, the preset trigger operation includes an interaction operation on the target comment content. Specifically, the interaction operation is a like operation, an add-to-favorites operation, a reply operation, etc. performed on the target comment content. When the target comment content is determined, interaction may be performed on the target comment content. Correspondingly, the application may switch the comment display interface to the recommendation interface in response to the interaction operation of the user on the target comment content, and display the recommend control for the target comment content in the recommendation interface.

In the above-mentioned implementation, the display of the recommend control can be triggered in different manners, making the comment recommendation operation more flexible, and expanding an applicable scenario for comment recommendation.

In some optional implementations, the method may further include: displaying recommendation prompt information, where the recommendation prompt information is configured to prompt to recommend the target comment content through the recommendation operation.

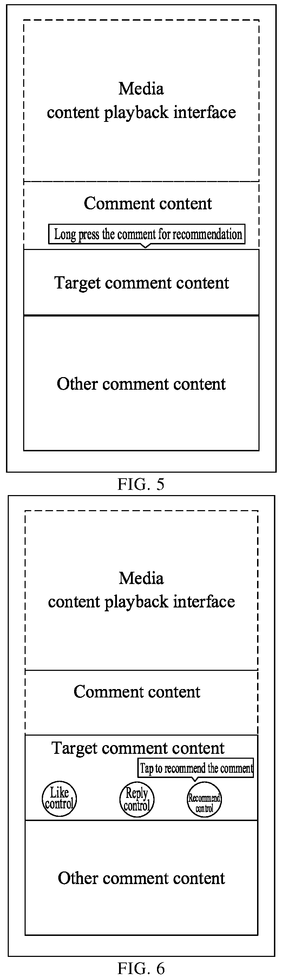

Specifically, the recommendation prompt information may be displayed at a preset location relative to the location of the target comment content. For example, "Long press the comment for recommendation" is displayed above the target comment content, as shown in FIG. 5. The recommendation prompt information may be displayed at a preset location relative to a location of the recommend control. For example, "Tap to recommend the comment" is displayed above the recommend control, as shown in FIG. 6. A display location of the recommendation prompt information may be set by a skilled person based on an actual requirement. This is not specifically limited herein.

The user may trigger a corresponding recommendation operation based on the recommendation prompt information, so that the application can respond to the recommendation operation and recommend the target comment content based on the recommendation operation.

In the above-mentioned implementation, display of the recommendation prompt information for the target comment content is supported, to guide the user to perform comment recommendation based on the recommendation prompt information.

Step S2022: In response to a trigger operation on the recommend control, the recommendation icon corresponding to the target comment content is displayed.

The trigger operation is an operation that the user performs on the recommend control, such as a tap operation and a touch operation. The tap operation is used as an example. When the user taps the recommend control, the application displays the recommendation icon at a preset location relative to the target comment content in response to the tap operation of the user on the recommend control. As shown in FIG. 2, the recommendation icon is displayed below the target comment content.

According to the method for recommending a comment on media content provided in this embodiment, the recommend control is displayed by triggering the target comment content, and then the corresponding recommendation icon is displayed by triggering the recommend control, so that the recommendation icon can only be displayed when the recommend control is triggered. In this way, associated display of the recommend control and the recommendation icon is implemented, and there is no need to display the recommendation icon in real time, thereby reducing occupancy of the recommendation icon on the comment display interface.

Specifically, step S202 may include the following step.

Step S2023: In response to the recommendation operation on the target comment content, the recommendation icon corresponding to the target comment content is displayed.

The recommend control is displayed at the preset location relative to the target comment content. As shown in FIG. 5 or FIG. 6, the recommend control is directly displayed below the target comment content. After viewing the target comment content of interest, the user may directly tap the recommend control to recommend the target comment content. Correspondingly, the application may respond to the trigger operation of the user on the recommend control and display the recommendation icon corresponding to the target comment content.

According to the method for recommending a comment on media content provided in this embodiment, when the recommendation operation on the target comment content is triggered, the corresponding recommendation icon is directly displayed. This implements direct display of the recommendation icon, and facilitates the user in intuitively learning of recommendation information associated with the target comment content.

In some optional implementations, the recommendation operation on the target comment content further includes: obtaining description information corresponding to the recommendation operation.

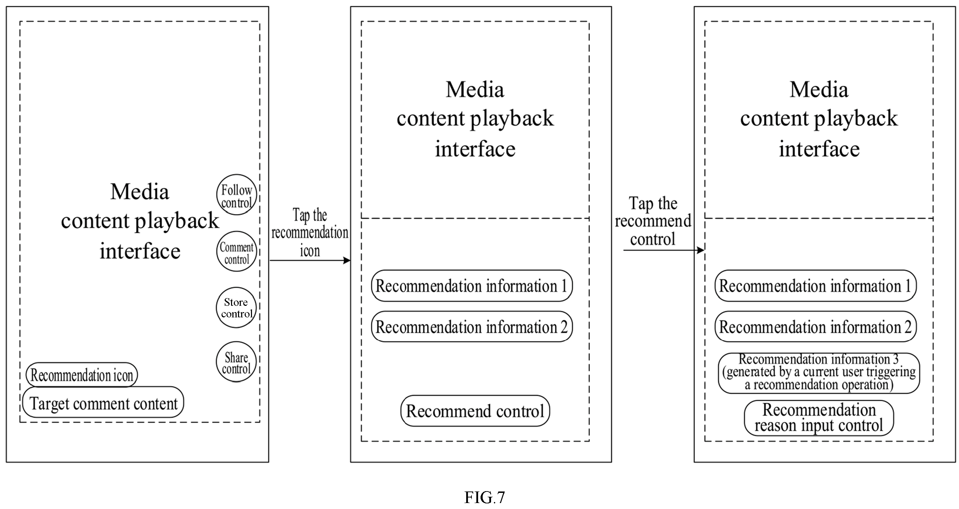

The description information is a recommendation reason input by the user when recommending the target comment content. A recommendation reason input control is displayed when the recommendation operation is triggered. As shown in FIG. 7, the user may trigger the recommendation reason input control, to input the recommendation reason in an edit box corresponding to the recommendation reason input control. Correspondingly, the application may obtain, in response to the user performing an edit operation in the edit box, description information corresponding to a current recommendation operation.

According to the method for recommending a comment on media content provided in this embodiment, when the target comment content is recommended, input of the recommendation reason is supported, so that other friends can discover the target comment content and key information expressed in the target media content.

Specifically, step S202 may further include the following steps.

Step S2024: Recommendation information for the target comment content is obtained.

The recommendation information includes information about and/or description information of a recommendation user performing the recommendation operation.

The information about the recommendation user is used to indicate a user recommending the target comment content, and the description information is used to indicate a reason why other users recommend the target comment content. The recommendation information is associated with the target comment content. When the target comment content is recommended, the recommendation information corresponding to the target comment content may be obtained through an association relationship between the recommendation information and the target comment content.

Step S2025: The recommendation information and the associated information of the target comment content is displayed at a preset location on the media content playback interface.

The associated information of the target comment content includes at least one of the following: a publisher of the target comment content, text content included in the target comment content, image content included in the target comment content, video content included in the target comment content, and audio content included in the target comment content.

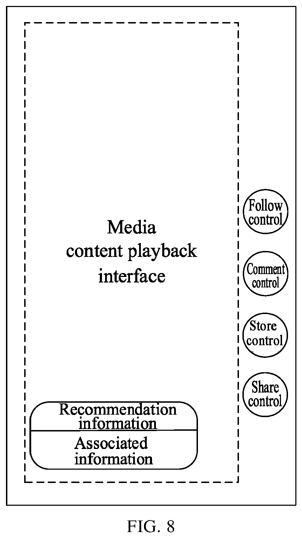

The preset location is a preset display location for the recommendation information and the associated information. For example, the recommendation information and the associated information are displayed at the lower left part of the media content playback interface, as shown in FIG. 8. After the recommendation information corresponding to the target comment content is obtained, when the target media content is played, the recommendation information and the associated information of the target comment content are displayed at the preset location on the media content playback interface in the form of a card.

According to the method for recommending a comment on media content provided in this embodiment, display of the information about the recommendation user, the description information, and the associated information of the target comment content is supported in the media content playback interface, so that other friends viewing the target media content can intuitively learn of the recommendation information for the target comment content in the target media content.

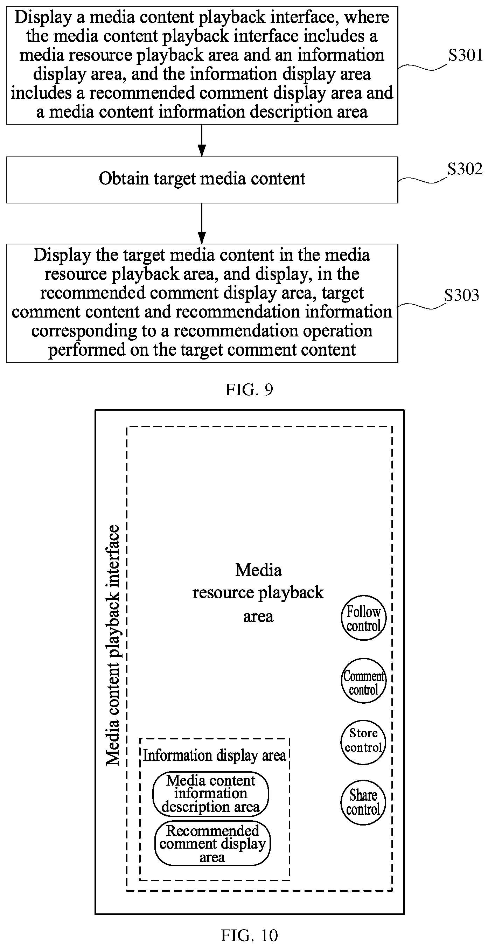

In this embodiment, a method for displaying comment content is provided, which may be applied to an electronic device, such as a mobile phone, a tablet computer, or a computer. FIG. 9 is a schematic flowchart of a method for displaying comment content according to an embodiment of the present disclosure. As shown in FIG. 9, the process includes the following steps.

Step S301: A media content playback interface is displayed, where the media content playback interface includes a media resource playback area and an information display area, and the information display area includes a recommended comment display area and a media content information description area.

Media content is displayed through the media content playback interface. After a user opens an application installed in an electronic device, the application displays the media content playback interface. As shown in FIG. 10, the media content playback interface includes the media resource playback area and the information display area. The media resource playback area is used to play the media content. The information display area is used to display related information of a media resource, specifically including information about a publisher publishing media content, description information for the media content, a comment recommendation for the media content, etc.

Specifically, as shown in FIG. 10, the information about the publisher publishing media content and the description information for the media content may be displayed in the media content information description area. The comment recommendation for the media content may be displayed in the recommended comment display area. The recommended comment display area may be displayed below the media content information description area in the form of a card, or certainly, above the media content information description area. This is not specifically limited herein.

Step S302: Target media content is obtained.

The target media content is media content that the user is currently watching. Specifically, a threshold for continuous playback duration of the media content may be set, and when continuous playback duration of a piece of media content exceeds the set threshold for continuous playback duration, it indicates that the media content is the target media content currently being played.

In a specific example, when browsing media content in the application through the media content playback interface, the user may skip media content of no interest, for example, switching to next media content through a slide-up operation. When viewing media content of interest, the user stops switching media content, so that the media content of interest can be played in the media content playback interface. In this case, it may be determined that media content currently being played is the target media content.

Step S303: The target media content is displayed in the media resource playback area, and display, in the recommended comment display area, target comment content and recommendation information corresponding to a recommendation operation performed on the target comment content.

The target comment content is comment content for the target media content.

When the target media content is determined, the target media content is displayed in the media resource playback area for playback, the target comment content existing for the target media content is displayed in the recommended comment display area, and the recommendation information associated with the target comment content is displayed.

According to the method for displaying comment content provided in this embodiment, when the target media content is displayed in the media resource playback area of the media content playback interface, the target comment content and the recommendation information corresponding to the recommendation operation performed on the target comment content are displayed in the recommended comment display area. In this way, the user viewing target media content can obtain target comment content recommended by associated friends for the target media content in a timely manner, thereby implementing recommendation display for comment content.

In some optional implementations, a second user performing the recommendation operation on the target comment content has a preset association relationship with a first user currently playing the target media content.

The preset association relationship is a preset association relationship between different users, such as a mutual-follow relationship and a friend relationship. The first user is a user who logs in to the application for playback of the target media content, and the second user is a user who has browsed the target media content and recommends the target comment content.

When it is determined that there is the preset association relationship between the first user and the second user, when the second user recommends target comment content for a piece of target media content, and the first user views the target media content, recommendation information from the second user for the target comment content is displayed in the recommended comment display area.

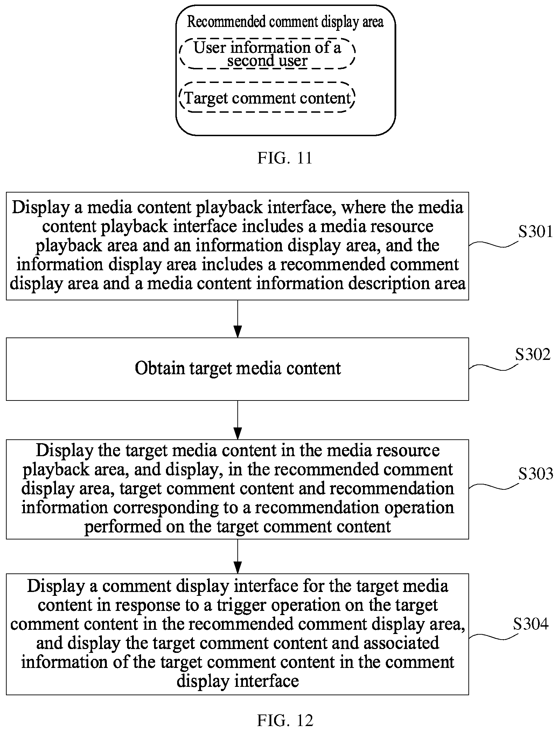

Specifically, the recommendation information may include user information of the second user and/or description information of the second user. As shown in FIG. 11, the user information of the second user recommending the target comment content is displayed in the recommended comment display area.

According to the method for displaying comment content provided in this embodiment, when there is the preset association relationship between the first user and the second user, the recommendation information generated by the second user for the target comment content can be displayed in the recommended comment display area of the media content playback interface of the first user. In this way, recommendation display for comment content is implemented.

In an optional implementation, the method further includes: displaying, in response to the second user performing the recommendation operation on a plurality of pieces of target comment content, the plurality of pieces of target comment content in the recommended comment display area in parallel and/or in a carousel manner.

If the second user recommends a plurality of pieces of target comment content for the target media content, when the first user views the target media content, the plurality of pieces of target comment content may be sequentially displayed in the recommended comment display area in a carousel manner. The plurality of pieces of target comment content may alternatively be displayed in the recommended comment display area in parallel.

According to the method for displaying comment content provided in this embodiment, when there are a plurality of pieces of target comment content, display of the plurality of pieces of target comment content in a carousel manner and/or in parallel is supported, to display all the pieces of target comment content.

In an optional implementation, the method further includes: determining, in response to the second user performing the recommendation operation on a plurality of pieces of target comment content, target comment content meeting a preset condition from the plurality of pieces of target comment content, and displaying the target comment content meeting the preset condition in the recommended comment display area.

The preset condition is a preset display condition for a recommended comment. For example, target comment content with the highest recommendation count is preferentially displayed, or target comment content with the highest view count is preferentially displayed.

Specifically, when the second user recommends a plurality of pieces of target comment content for the target media content, the plurality of pieces of target comment content are analyzed, to determine target comment content meeting the preset condition therefrom, and the target comment content meeting the preset condition is displayed in the recommended comment display area.

The highest recommendation count is used as an example. A recommendation count corresponding to each of a plurality of pieces of target comment content is analyzed, to determine target comment content with the highest recommendation count from the plurality of pieces of target comment content, and when the first user plays the target media content, the target comment content with the highest recommendation count is displayed in the recommended comment display area.

According to the method for displaying comment content provided in this embodiment, when there are a plurality of pieces of target comment content, display of the target comment content meeting the preset condition (for example, having the highest recommendation count) is supported, to highlight the target comment content corresponding to the target media content. This meets flexible display of the target comment content.

In an optional implementation, as shown in FIG. 12, after step S303, the method may further include the following step.

Step S304: A comment display interface for the target media content is displayed in response to a trigger operation on the target comment content in the recommended comment display area, and display the target comment content and associated information of the target comment content in the comment display interface.

If the target comment content is large, only part of the content may be displayed in the recommended comment display area. If the user wants to view the full target comment content, the user may tap the target comment content in the recommended comment display area, and correspondingly, the application may enter the comment display interface for the target media content in response to the tap operation of the user on the target comment content in the recommended comment display area, and can directly locate the target comment content, to display the target comment content and the associated information of the target comment content.

Certainly, the user may further browse other comment content displayed in the comment display interface, to discover whether there is comment content of interest to the user. If there is comment content of interest to the user, the user may further recommend the comment content of interest to other friends.

According to the method for displaying comment content provided in this embodiment, triggering the target comment content to enter the comment display interface is supported, to view or browse associated comment content corresponding to the target comment content, so that the user can discover the comment content of interest to the user.

In an optional implementation, the method may further include: displaying an associated interface of the second user or performing a recommendation operation on the target comment content in response to a trigger operation on the recommendation information in the recommended comment display area.

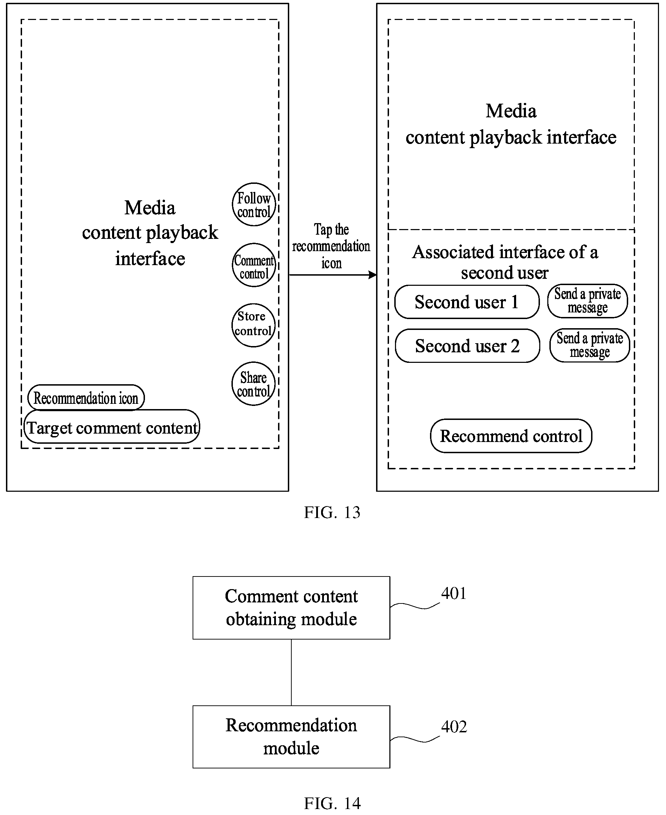

The associated interface is a display interface associated with the recommended comment display area. The target comment content and the recommendation information corresponding to the target comment content are displayed in the recommended comment display area. If the user wants to view specific content of the recommendation information, the user may trigger (for example, tap) the recommendation information, and correspondingly, the application may switch the recommended comment display area to the associated interface of the second user in response to the trigger operation of the user on the recommendation information. The second user recommending the target comment content is displayed in the associated interface. In addition, the recommend control may also be displayed in the associated interface, to recommend, through the recommend control, the target comment content corresponding to the recommendation information, as shown in FIG. 13.

According to the method for displaying comment content provided in this embodiment, triggering the recommendation information to enter the associated interface of the second user corresponding to the recommendation information is supported, to view the second user recommending the target comment, or recommend the target comment content in the associated interface. This implements detailed display of the recommendation information and a re-recommendation for the target comment content.

In an optional implementation, the associated interface of the second user displays at least one interaction control corresponding to the second user. The interaction control is used to implement interaction between the first user and the second user, such as sending a private message as shown in FIG. 13. When the first user wants to interact with the second user regarding the target comment content, the first user may trigger the interaction control to interact with the second user through the interaction control, such as sending a private message to the second user.

According to the method for displaying comment content provided in this embodiment, the interaction control is set in the associated interface, such that the first user can interact with the second user recommending the target comment. This implements an interaction function of comment recommendation.

In this embodiment, an apparatus for recommending a comment on media content is further provided. The apparatus is configured to implement the above-mentioned embodiments and preferred implementations, which have already been described and are not repeated herein again. As used below, the term "module" may be a combination of software and/or hardware that implements a predetermined function. Although the apparatus described in the following embodiment is preferably implemented in software, it is also possible and contemplated that the apparatus is implemented in hardware or a combination of software and hardware.

This embodiment provides an apparatus for recommending a comment on media content. As shown in FIG. 14, the apparatus includes:
a comment content obtaining module 401 configured to obtain and display target comment content for target media content; and
a recommendation module 402 configured to display, in response to a recommendation operation on the target comment content, a recommendation icon corresponding to the target comment content, where the recommendation icon indicates that the target comment content is recommended based on a trigger operation, and simultaneously display, in a media content playback interface, recommendation information corresponding to the recommendation operation, associated information of the target comment content, and the target media content.

In some optional implementations, the media content playback interface includes a comment control. The comment content obtaining module 401 may include:
a comment display unit configured to display at least one piece of comment content for the target media content in response to a trigger operation on the comment control in the media content playback interface; and
a comment selection unit configured to determine the target comment content for the target media content in response to a selection operation on the at least one piece of comment content.

In some optional implementations, the recommendation module 402 may include:
a recommend control display unit configured to display, in response to a preset trigger operation on the target comment content, a recommend control corresponding to the target comment content; and
a first recommendation icon display unit configured to display, in response to a trigger operation on the recommend control, the recommendation icon corresponding to the target comment content.

In some optional implementations, the recommendation module 402 may further include:
a second recommendation icon display unit configured to display, in response to a trigger operation on a recommend control corresponding to the target comment content, the recommendation icon corresponding to the target comment content.

In some optional implementations, the recommendation module 402 may further include:
a recommendation reason obtaining module configured to obtain description information corresponding to the recommendation operation.

In some optional implementations, the recommendation module 402 may further include:
a recommendation information obtaining unit configured to obtain recommendation information for the target comment content, where the recommendation information includes information about and/or description information of a recommendation user performing the recommendation operation; and
a display unit configured to display the recommendation information and the associated information of the target comment content at a preset location on the media content playback interface.

Specifically, the associated information of the target comment content includes at least one of the following: a publisher of the target comment content, text content included in the target comment content, image content included in the target comment content, video content included in the target comment content, and audio content included in the target comment content.

Further functional descriptions of the above-mentioned modules and the above-mentioned units are the same as those in the above-mentioned corresponding embodiments. Details are not described herein again.

The apparatus for recommending a comment on media content in this embodiment is presented in the form of a functional unit, and the unit here is an ASIC circuit, a processor and a memory that execute one or more software programs or fixed programs, and/or another device that can provide the above-mentioned functions.

According to the apparatus for recommending a comment on media content provided in this embodiment, when the target comment content is viewed for recommendation, the recommendation icon for the target comment content can be displayed, so that the user can recommend the target comment content viewed by the user by triggering the recommendation icon, and the recommendation information corresponding to the triggered recommendation operation, the associated information of the target comment content, and the target media content can be displayed in the media content playback interface. In this way, flexible recommendation for the target comment content is implemented, and other users viewing the target media content can view the target comment content recommended by friends.

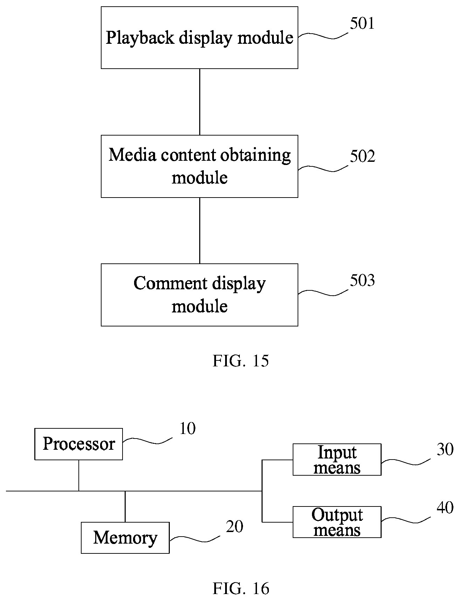

This embodiment provides an apparatus for displaying comment content. As shown in FIG. 15, the apparatus includes:
a playback display module 501 configured to display a media content playback interface, where the media content playback interface includes a media resource playback area and an information display area, and the information display area includes a recommended comment display area and a media content information description area;
a media content obtaining module 502 configured to obtain target media content; and
a comment display module 503 configured to display the target media content in the media resource playback area, and display, in the recommended comment display area, target comment content and recommendation information corresponding to a recommendation operation performed on the target comment content, where the target comment content is comment content for the target media content.

In some optional implementations, a second user performing the recommendation operation on the target comment content has a preset association relationship with a first user currently playing the target media content.

In some optional implementations, the comment display module 503 may include:
a first display unit configured to display, in response to the second user performing the recommendation operation on a plurality of pieces of target comment content, the plurality of pieces of target comment content in the recommended comment display area in parallel and/or in a carousel manner.

In some optional implementations, the comment display module 503 may further include:
a second display unit configured to determine, in response to the second user performing the recommendation operation on a plurality of pieces of target comment content, target comment content meeting a preset condition from the plurality of pieces of target comment content, and display the target comment content meeting the preset condition in the recommended comment display area.

In some optional implementations, the apparatus for displaying comment content may further include:
a comment information display module configured to display a comment display interface for the target media content in response to a trigger operation on the target comment content in the recommended comment display area, and display the target comment content and associated information of the target comment content in the comment display interface.

In some optional implementations, the apparatus for displaying comment content may further include:
an associated interface display module configured to display an associated interface of the second user or perform a recommendation operation on the target comment content in response to a trigger operation on the recommendation information in the recommended comment display area.

In an optional implementation, the associated interface of the second user displays at least one interaction control corresponding to the second user.

Further functional descriptions of the above-mentioned modules and the above-mentioned units are the same as those in the above-mentioned corresponding embodiments. Details are not described herein again.

The apparatus for displaying comment content in this embodiment is presented in the form of a functional unit, and the unit here is an ASIC circuit, a processor and a memory that execute one or more software programs or fixed programs, and/or another device that can provide the above-mentioned functions.

According to the apparatus for displaying comment content provided in this embodiment, when the target media content is displayed in the media resource playback area of the media content playback interface, the target comment content and the recommendation information corresponding to the recommendation operation performed on the target comment content are displayed in the recommended comment display area. In this way, the user viewing target media content can obtain target comment content recommended by associated friends for the target media content in a timely manner, thereby achieving recommendation display for comment content.

An embodiment of the present disclosure further provides an electronic device having the apparatus for recommending a comment on media content shown in FIG. 14 or the apparatus for displaying comment content shown in FIG. 15.

Refer to FIG. 16. FIG. 16 is a schematic structural diagram of an electronic device according to an optional embodiment of the present disclosure. As shown in FIG. 16, the electronic device includes: one or more processors 10, a memory 20, and interfaces for connecting components, including a high-speed interface and a low-speed interface. The components are communicatively connected to each other via different buses, and can be mounted on a common motherboard or otherwise as desired. The processor may process instructions executed in the electronic device, including instructions stored in or on the memory to display graphical information of a GUI on an external input/output means (such as a display device coupled to the interface). In some optional implementations, if required, a plurality of processors and/or a plurality of buses may be used together with a plurality of memories and a plurality of memories. Likewise, a plurality of other devices may be connected, each providing some of the necessary operations (for example, as a server array, a set of blade servers, or a multi-processor system). One processor 10 is used as an example in FIG. 16.

The processor 10 may be a central processor, a network processor, or a combination thereof. The processor 10 may further include a hardware chip. The hardware chip may be an application-specific integrated circuit, a programmable logic device, or a combination thereof. The programmable logic device may be a complex programmable logic device, a field-programmable gate array, a generic array logic, or any combination thereof.

The memory 20 stores instructions executable by at least one processor 10, to cause the at least one processor 10 to perform and implement the method shown in the above-mentioned embodiments.

The memory 20 may include a program storage area and a data storage area. The program storage area may store an operating system, and an application required by at least one function. The data storage area may store data created based on use of an imaging device, etc. In addition, the memory 20 may include a high-speed random-access memory, and may further include a non-transitory memory, such as at least one magnetic disk storage device, a flash memory device, or other non-transitory solid-state storage devices. In some optional implementations, the memory 20 optionally includes memories remotely disposed relative to the processor 10. The remote memories may be connected to the computer device through a network. Instances of the network include, but are not limited to, the Internet, intranets, local area networks, mobile communication networks, and combinations thereof.

The memory 20 may include a volatile memory, such as a random-access memory. The memory may also include a non-volatile memory, such as a flash memory, a hard disk drive, or a solid-state drive. The memory 20 may also include a combination of the above-mentioned types of memories.

The imaging device further includes an input means 30 and an output means 40. The processor 10, the memory 20, the input means 30, and the output means 40 may be connected through a bus or in another manner, for example, are connected through the bus in FIG. 16.

An input means 30 can receive entered numeric or character information and generate a key signal input related to a user setting and function control of the imaging device, such as a touch screen, a keypad, a mouse, a trackpad, a touchpad, a pointing stick, one or more mouse buttons, a trackball, or a joystick. The output means 40 may include a display device, an auxiliary lighting means (for example, an LED), a tactile feedback means (for example, a vibration motor), and the like. The display device includes, but is not limited to, a liquid crystal display, a light-emitting diode, a display, and a plasma display. In some optional implementations, the display device may be a touch screen.

The electronic device further includes a communication interface for the electronic device to perform data communication with other devices or communication networks.

An embodiment of the present disclosure further provides a computer-readable storage medium. The above-mentioned method according to an embodiment of the present disclosure may be implemented in hardware or firmware, or implemented as computer code that may be recorded on a storage medium, or implemented as computer code that is originally stored on a remote storage medium or a non-transitory machine-readable storage medium downloaded over a network and that is to be stored on a local storage medium, so that the method described herein may be processed by such software stored on a storage medium using a general-purpose computer, a special-purpose processor, or programmable or special-purpose hardware. The storage medium may be a magnetic disk, an optical disc, a read-only storage memory, a random storage memory, a flash memory, a hard disk drive or a solid-state drive, etc. Further, the storage medium may also include a combination of the above-mentioned types of memories. It can be understood that a computer, a processor, a microprocessor controller, or programmable hardware includes a storage component that can store or receive software or computer code. When the software or computer code is accessed and executed by the computer, the processor, or the hardware, the methods shown in the above-mentioned embodiments are implemented.

Although the embodiments of the present disclosure are described with reference to the accompanying drawings, those skilled in the art would provide various modifications and variations without departing from the spirit and scope of the present disclosure, and such modifications and variations shall all fall within the scope defined by the appended claims.

## Claims

1. A method for recommending a comment on media content, comprising:
obtaining and displaying a first comment content for a first media content; and
displaying, in response to a recommendation operation on the first comment content, a recommendation icon corresponding to the first comment content, the recommendation icon indicating that the first comment content is recommended based on a trigger operation, and simultaneously displaying, in a media content playback interface, recommendation information corresponding to the recommendation operation, associated information of the first comment content, and the first media content.

2. The method according to claim 1, wherein displaying, in response to the recommendation operation on the first comment content, the recommendation icon corresponding to the first comment content comprises:
displaying, in response to a preset trigger operation on the first comment content, a recommend control corresponding to the first comment content; and
displaying, in response to a trigger operation on the recommend control, the recommendation icon corresponding to the first comment content; or
displaying, in response to the recommendation operation on the first comment content, the recommendation icon corresponding to the first comment content comprises:
displaying, in response to a trigger operation on a recommend control corresponding to the first comment content, the recommendation icon corresponding to the first comment content.

3. The method according to claim 2, wherein displaying, in response to the preset trigger operation on the first comment content, the recommend control corresponding to the first comment content comprises:
displaying a recommendation interface in response to the preset trigger operation on the first comment content; and
displaying the recommend control in the recommendation interface.

4. The method according to claim 2 or 3, wherein the preset trigger operation comprises a long press operation on the first comment content.

5. The method according to claim 2, wherein the preset trigger operation comprises an interaction operation on the first comment content, and the method further comprises:
displaying, in response to the interaction operation on the first comment content, the recommend control corresponding to the first comment content.

6. The method according to claim 2, wherein the method further comprises:
displaying recommendation prompt information, wherein the recommendation prompt information is configured to prompt to recommend the first comment content through the recommendation operation.

7. The method according to claim 2, wherein the recommendation operation on the first comment content further comprises:
obtaining description information corresponding to the recommendation operation.

8. The method according to claim 1, wherein simultaneously displaying, in the media content playback interface, the recommendation information corresponding to the recommendation operation, the first comment content, and the first media content comprises:
obtaining recommendation information for the first comment content, wherein the recommendation information comprises information about a recommendation user or description information of performing the recommendation operation; and
displaying the recommendation information and the associated information of the first comment content at a preset location on the media content playback interface.

9. The method according to claim 1 or 8, wherein the associated information of the first comment content comprises at least one of the following: a publisher of the first comment content, text content comprised in the first comment content, image content comprised in the first comment content, video content comprised in the first comment content, or audio content comprised in the first comment content.

10. The method according to claim 1, wherein the media content playback interface comprises a comment control; and obtaining and displaying the first comment content for the first media content comprises:
displaying at least one piece of comment content for the first media content in response to a trigger operation on the comment control in the media content playback interface; and
determining the first comment content for the first media content in response to a selection operation on the at least one piece of comment content.

11. A method for displaying comment content, comprising:
displaying a media content playback interface, the media content playback interface comprising a media resource playback area and an information display area, and the information display area comprising a recommended comment display area and a media content information description area;
obtaining a first media content; and
displaying the first media content in the media resource playback area, and displaying, in the recommended comment display area, a first comment content and recommendation information corresponding to a recommendation operation performed on the first comment content, the first comment content being comment content for the first media content.

12. The method according to claim 11, wherein a second user performing the recommendation operation on the first comment content has a preset association relationship with a first user currently playing the first media content.

13. The method according to claim 12, wherein the recommendation information comprises user information of the second user and/or description information of the second user.

14. The method according to claim 12, further comprising:
displaying, in response to the second user performing the recommendation operation on a plurality of pieces of the first comment content, the plurality of pieces of the first comment content in the recommended comment display area in parallel and/or in a carousel manner;
or
determining, in response to the second user performing the recommendation operation on a plurality of pieces of the first comment content, the first comment content meeting a preset condition from the plurality of pieces of the first comment content, and displaying the first comment content meeting the preset condition in the recommended comment display area.

15. The method according to claim 11, further comprising:
displaying a comment display interface for the first media content in response to a trigger operation on the first comment content in the recommended comment display area, and displaying the first comment content and associated information of the first comment content in the comment display interface.

16. The method according to claim 12, further comprising:
displaying an associated interface of the second user or performing a recommendation operation on the first comment content in response to a trigger operation on the recommendation information in the recommended comment display area.

17. The method according to claim 16, wherein the associated interface of the second user displays at least one interaction control corresponding to the second user.

18. An apparatus for recommending a comment on media content, comprising:
a comment content obtaining module configured to obtain and display a first comment content for a first media content; and
a recommendation module configured to display, in response to a recommendation operation on the first comment content, a recommendation icon corresponding to the first comment content, the recommendation icon indicating that the first comment content is recommended based on a trigger operation, and simultaneously display, in a media content playback interface, recommendation information corresponding to the recommendation operation, associated information of the first comment content, and the first media content.

19. An apparatus for displaying comment content, comprising:
a playback display module configured to display a media content playback interface, wherein the media content playback interface comprises a media resource playback area and an information display area, and the information display area comprises a recommended comment display area and a media content information description area;
a media content obtaining module configured to obtain a first media content; and
a comment display module configured to display the first media content in the media resource playback area, and display, in the recommended comment display area, a first comment content and recommendation information corresponding to a recommendation operation performed on the first comment content, the first comment content being comment content for the first media content.

20. An electronic device, comprising:
a memory and a processor communicatively connected to each other, wherein the memory stores computer instructions, and the processor executes the computer instructions to perform the method for recommending a comment on media content according to any of claims 1 to 10 or the method for displaying comment content according to any of claims 11 to 17.

21. A computer-readable storage medium having computer instructions stored therein that are used to cause a computer to perform the method for recommending a comment on media content according to any of claims 1 to 10 or the method for displaying comment content according to any of claims 11 to 17.
